# EUROPÄISCHE PATENTSCHRIFT

(11) **EP 1 817 516 B1**
(45) Veröffentlichungstag und Bekanntmachung des Hinweises auf die Patenterteilung: **28.05.2008**
(21) Anmeldenummer: 05791816.1
(22) Anmeldetag: 13.09.2005
(51) Int. Cl.: F16H 63/48

(54) **PARKSPERRE FÜR EIN KRAFTFAHRZEUG**
PARKING LOCK FOR A MOTOR VEHICLE
FREIN DE STATIONNEMENT POUR VEHICULE AUTOMOBILE

(30) Priorität: 02.12.2004 DE 102004058332
(43) Veröffentlichungstag der Anmeldung: 15.08.2007
(73) Patentinhaber: ZF FRIEDRICHSHAFEN AG, 88038 Friedrichshafen (DE)
(72) Erfinder: SAUTER, Bernhard, 88069 Tettnang (DE); HÖCKL, Gerhard, 88213 Ravensburg (DE)
(86) Internationale Anmeldenummer: PCT/EP2005/009791
(87) Internationale Veröffentlichungsnummer: WO 2006/058571

(56) Entgegenhaltungen:
- EP-A- 0 540 298
- DE-A1- 10 245 951
- DE-A1- 19 834 075
- US-A- 4 722 427
- US-A- 5 697 260
- US-A1- 2002 184 963

## Beschreibung

Die vorliegende Erfindung betrifft eine Parksperre für ein Kraftfahrzeug, welches ein Automatgetriebe oder ein automatisiertes Handschaltgetriebe umfasst, gemäß dem Oberbegriff des Patentanspruchs 1.

Aus dem Stand der Technik sind Parksperrenmechanismen für Automatgetriebe bekannt. Üblicherweise weisen derartige Mechanismen eine vorgespannte Feder auf, über die die Parksperre aktiviert wird. Zum Deaktivieren der Parksperre wird üblicherweise ein mechanisches Gestänge oder ein hydraulisch oder pneumatisch betätigter Zylinder verwendet. Hierbei wirkt eine Betätigungsstange des Gestänges bzw. eine Kolbenstange des Zylinders mit einer Parkklinke und einem Parkzahnrad zusammen.

Aus der DE 35 37 091 C1 ist eine Parksperre bekannt, mit einem Parkzahnrad, das auf der Abtriebswelle des Getriebes drehfest angeordnet ist, einer schwenkbaren Parkklinke, die zwischen einer Ruhelage und einer Wirklage in Eingriff mit dem Parkzahnrad beweglich ist, einem mit dem Handwählhebel verbundenen Hebel, der über ein abgewinkeltes Ende mit einer Betätigungsstange verbunden ist, mit einer gegenüber der Betätigungsstange entgegen der Kraft einer Einrückfeder verschiebbaren Schiebehülse, die mit einer konischen Schulter zum Verschieben der Parkklinke aus der Ruhelage in die Wirklage versehen ist, und mit einer Führung für die Schiebehülse im Gehäuse, wobei die Betätigungsstange an ihrem der Schiebehülse zugewandten Ende durch Anstauchen zu einem verdickten Kolbenteil geformt ist, der in einem Zylinderteil der Schiebehülse geführt wird.

Aus der US 5,685,406 ist eine Ausführung einer Parksperre bekannt, bei der eine Getriebeabtriebswelle drehfest mit einem Parksperrenrad verbunden ist, welches an seinem Außendurchmesser eine Art Keilwellenprofil aufweist. Des weiteren ist eine Sperrklinke vorgesehen, welche bei aktivierter Parksperre radial in das Keilwellenprofil des Parksperrenrades formschlüssig eingreift, wodurch die Getriebeabtriebswelle dann blockiert ist. Beim Auslegen der Parksperre wird die Sperrklinke über einen mechanisch wirkenden Mechanismus aus dem Eingriff mit dem Parksperrenrad geführt, so dass das Parksperrenrad bzw. die Getriebeabtriebswelle entriegelt ist und der Antriebsstrang abtriebsseitig nicht mehr verblockt ist. Das Auslegen der Parksperre erfolgt ebenfalls in Abhängigkeit einer entsprechenden Fahrerwunschvorgabe, wobei der Fahrer hierzu den Wählhebel aus der Parkstellung in eine beliebige andere Wählhebelposition positionieren muss.

Ferner ist aus der DE 199 33 618 A1 der Anmelderin eine Parksperrenvorrichtung für ein Automatgetriebe bekannt, umfassend ein Parksperrenrad, das eine Verzahnung aufweist, wobei in die Verzahnung eine Sperrklinke einrastbar ist, indem die Sperrklinke auf einer einen Sperrkegel aufweisenden Sperreinrichtung geführt in Sperrstellung drehbar ist. Der Sperrkegel ist hierbei gegen eine Federeinrichtung verschiebbar auf einem Verbindungselement zu einer Rastenscheibe einer Wählwelle angeordnet.

Beim Einlegen der Parksperre wird die Sperrklinke durch den Sperrkegel in die Verzahnung des Parksperrenrades gedrückt und stützt sich dabei gegen die Führungsplatte ab. Bei eingelegter Parksperre wird ein über die Antriebsräder abtriebsseitig an dem Getriebe anliegendes Drehmoment von der Sperrklinke abgestützt. Dieses Drehmoment wird beispielweise dadurch erzeugt, dass ein Fahrzeug in Vorwärtsfahrtrichtung bergauf oder bergab steht und die dabei an dem Fahrzeug angreifende Hangabtriebskraft abtriebsseitig in den Antriebsstrang eingeleitet wird. Durch das Blockieren der Getriebeabtriebswel le über die Parksperre wird der Antriebsstrang zwischen den Antriebsrädern und der Parksperre vorgespannt. Beim Auslegen der Parksperre wird der Sperrkegel in axialer Richtung verschoben, wodurch die infolge der Verspannung des Antriebsstrangs unter Spannung stehende Sperrklinke freigegeben wird. Bei diesem Vorgang tritt in nachteiliger Weise ein Entlastungsstoß auf: die Sperrklinke schlägt mit ihrem dem Parksperrenbolzen abgewandten Ende auf die Führungsplatte auf, so dass ein unerwünschtes, lautes metallisches Geräusch erzeugt wird. Dieses Geräusch pflanzt sich als Körperschall über die im Kraftfluss mit der Sperrklinke befindlichen Bauteile bis ins Getriebegehäuse fort und wird von dort nach außen als Schall ausgestrahlt, was zusätzlich zum Stoß als unangenehm empfunden wird.

Um dieses Problem zu lösen, bzw. um das beim Auslegen der Parksperre entstehende Geräusch zu reduzieren, ist im Rahmen der DE 102 45 951 A1 der Anmelderin eine Parksperrenvorrichtung für ein Automatgetriebe vorgeschlagen, bei der die mit dem Getriebegehäuse verbundenen Teile, nämlich die Sperrklinke, der Parksperrenbolzen und/oder die Führungsplatte, durch Zwischenschaltung von Feder- und/oder Dämpfungsgliedern in den Kraftfluss akustisch entkoppelt sind. Die DE 102 45 951 A1 beinhaltet die Merkmale des Oberbegriffs der Patentansprüche 1 und 16. Dabei geht die DE 102 45 951 A1 von einer Parksperre aus, bei der eine zum Blockieren eines Parksperrenrades vorgesehene Sperrklinke über einen Lagerbolzen in einem Gehäuse verschwenkbar gelagert und an einer parallel zur Lagerbolzenachse angeordneten gehäusefesten Führungsplatte geführt wird. Als eine Dämpfungsmaßnahme wird hierbei vorgeschlagen, die Sperrklinke von der Führungsplatte durch eine zwischen diesen angeordnete Feder oder ein zwischen diesen angeordnetes Dämpfungsglied akustisch zu entkoppeln. Dabei wirkt die genannte Feder bzw. das genannte Dämpfungsglied derart, dass, wenn die zuvor formschlüssig in das Parksperrenrad eingreifende Sperrklinke über ein geeignetes Betätigungselement aus dieser Verriegelungsstellung herausgeschwenkt wird, ein direktes metallisches Aufschlagen der Sperrklinke auf die Führungsplatte verhindert wird. Die Praxis hat jedoch gezeigt, dass beim Auslegen der Sperrklinke aus einem Zustand hoher Verspannung heraus nach wie vor ein Aufschlaggeräusch entsteht, ent-weder durch das Auftreffen der Feder auf eine ihr zugeordnete Gegenfläche, ein Verblocken der Feder oder ein Auftreffen des Dämpfungsglieds auf eine ihm zugeordnete Gegenfläche, wodurch eine derartige Maßnahme nicht ausreicht, um den Entlastungsstoß so weit abzudämpfen, dass dieser auch in extremen Betriebszuständen des Fahrzeugs von dem Fahrer nicht als störend empfunden wird.

Als eine andere Maßnahme zur Dämpfung des beim Lösen des Formschlusses der Parksperre auftretenden Entlastungsstoßes wird in der DE 102 45 951 A1 vorgeschlagen, den Lager- bzw. Parksperrenbolzen, an dem die Sperrklinke der Parksperre verdrehbar bzw. verschwenkbar im Gehäuse gelagert ist, nicht direkt im Gehäuse zu lagern, sondern in einer Gummibuchse, die ihrerseits in einer entsprechenden Aussparung bzw. Bohrung des Gehäuses eingesetzt ist.

Ferner wird als eine weitere Maßnahme zur Dämpfung des beim Lösen des Formschlusses der Parksperre auftretenden Entlastungsstoßes in der DE 102 45 951 A1 vorgeschlagen, die obere Führungsplatte des Parksperrensystems akustisch vom Gehäuse zu entkoppeln, indem die Führungsplatte unter Verwendung von Dämpfungsgliedern mit dem Gehäuse verschraubt wird, so dass zwischen Führungsplatte und Gehäuse kein metallischer Kontakt mehr auftritt. Die Praxis hat jedoch gezeigt, dass derartige Elastizitäten ebenfalls nicht ausreichen, um das beim Auslegen der Sperrklinke aus einem Zustand hoher Verspannung heraus entstehende Geräusch beim Aufschlagen der Klinke auf die Führungsplatte hinreichend stark abzudämpfen.

Aus der DE 195 35 239 C1 ist eine Parksperre bekannt, bei der die Sperrklinke und/oder das Parksperrenrad elastisch verformbar ausgebildet sind. Die Praxis hat jedoch gezeigt, dass derartige Elastizitäten, insbesondere in der Lagerung der Sperrklinke einerseits auf die Präzision beim Einlegen der Parksperre einen nachteiligen Einfluss haben, andererseits auch einem hohen mechanischen Verschleiß infolge der zum Teil erheblichen Lagerkräfte unterliegen.

Des weiteren wird im Rahmen der DE 102 55 714 A1 der Anmelderin zur Vermeidung des beim Lösen des Formschlusses der Parksperre auftretenden Entlastungsstoßes vorgeschlagen, den Abtrieb bei aktivierter Parksperre zusätzlich über wenigstens ein zugeschaltetes reibschlüssiges Schaltelement des Getriebes zu arretieren, weiches erst nach dem Lösen des Formschlusses der Parksperre gesteuert abgeschaltet wird. Dieses Verfahren erfordert jedoch in nachteiliger Weise eine aufwändige Steuerung.

Der vorliegenden Erfindung liegt die Aufgabe zugrunde, eine Parksperre für ein Automatgetriebe eines Kraftfahrzeugs anzugeben, bei der ohne weitere Steuerungsmaßnahmen der Entlastungsstoß beim Lösen der Parksperre weitgehend vermieden wird.

Diese Aufgabe wird durch die Merkmale der unabhängigen Patentansprüche 1 und 16 gelöst. Weitere erfindungsgemäße Ausgestaltungen und Vorteile gehen aus den entsprechenden Unteransprüchen hervor.

Gemäß dem Patentanspruch 1 wird eine Parksperre vorgeschlagen, umfassend ein mit dem Abtrieb des Getriebes verbundenes Parksperrenrad, eine über einen Parksperrenbolzen in einem Getriebegehäuse schwenkbar gelagerte Sperrklinke, die in das Parksperrenrad ein- oder ausrastet und deren schwenkbares Ende in einer mit dem Getriebegehäuse verbundenen Führungsplatte geführt ist, ein Sperrelement, das im gesperrten Zustand zwischen der Sperrklinke und der Führungsplatte eingeklemmt ist, um ein Herausdrücken der Sperrklinke aus einer Zahnlücke des Parksperrenrades zu verhindern, bei der ein hydraulisches Dämpfungselement vorgesehen ist, das zumindest während des Auslegens der Parksperre mit der Sperrklinke in Wirkverbindung steht, mittels dessen die Bewegung des schwenkbaren Endes der Sperrklinke in Richtung auf die Führungsplatte beim Lösen der Parksperre derart gedämpft wird, dass der eingangs beschriebene Entlastungsstoß vermieden wird.

Erfindungsgemäß umfasst das hydraulische Dämpfungselement einen mit der Sperrklinke in Wirkverbindung stehenden Kolben, der derart in einem Zylinder oder in einer Zylinderbohrung verschiebbar angeordnet ist, dass eine Bewegung der Sperrklinke in Richtung auf die Führungsplatte in einer relativen Bewegung des Kolbens und des mit Öl gefüllten Zylinders zueinander resultiert, so dass das im Zylinder befindliche Öl durch eine ein Rohr und eine eine Drosselwirkung bewirkende Blende bzw. Drosselbohrung aufweisende Fluidverbindung zu einem Ölsumpf gedrückt wird. Der Dämpfungsgrad des hydraulischen Dämpfungselementes ist durch die Dimensionierung der Blende bzw. Drosselöffnung einstellbar.

Das Rohr dient der Selbstentlüftung, wobei es mittels einer Schraube im Zylinder befestigt oder im Zylinder eingepresst sein kann. Um die Selbstentlüftung zu erzielen, ist das hydraulische Dämpfungselement derart ausgeführt, dass das beim Lösen der Parksperre vom Kolben ausgeschobene Volumen größer ist als das vom Rohr eingeschlossene Volumen.

Gemäß der Erfindung kann die Blende im Rohr oder, falls das Rohr mittels einer Schraube befestigt ist, an der Schraube vorgesehen sein oder als Drosselbohrung direkt in den Zylinder gebohrt sein.

Im Rahmen einer weiteren Ausführungsform der Erfindung wird gemäß Patentanspruch 16 vorgeschlagen, dass die Drosselbohrung im von der Sperrklinke bewegten Kolben vorgesehen ist, und dass die Getriebeölzufuhr über eine oberhalb der Drosselbohrung im Zylinder bzw. in der Zylinderbohrung vorgesehene Befüllöffnung erfolgt; hierbei ist der das Dämpfergehäuse bildende Zylinder bzw. die Zylinderbohrung geschlossen, so dass keine Luft in den Kolbenraum eintreten kann.

Dadurch wird gewährleistet, dass auch bei starker Neigung des Fahrzeugs, wie dies z.B. am Hang der Fall sein kann, immer ausreichend Öl im hydraulischen Dämpferelement vorhanden ist, um eine effektive Dämpfung zu gewährleisten.

Für den Fall, dass der Kolben nicht mit der Sperrklinke verbunden ist, weist das hydraulische Dämpfungselement eine im Zylinder angeordnete Druckfeder auf, welche beim Einlegen der Parksperre ein Ausschieben des Kolbens bewirkt, so dass der Zylinder wieder mit Öl aus dem Ölsumpf befüllt werden kann.

Die Erfindung wird im Folgenden anhand der beigefügten Figuren beispielhaft näher erläutert, wobei gleiche Bauteile bzw. Bauteile vergleichbarer Funktion auch mit gleichen Bezugszeichen versehen sind. In diesen stellen dar:
- Figur 1: eine schematische Ansicht einer ersten bevorzugten Ausführungsform der erfindungsgemäßen Parksperre;
- Figur 2: eine schematische Ansicht einer weiteren bevorzugten Ausführungsform der erfindungsgemäßen Parksperre;
- Figur 3: eine schematische Ansicht einer dritten bevorzugten Ausführungsform der erfindungsgemäßen Parksperre;
- Figur 4: eine schematische Ansicht einer vierten bevorzugten Ausführungsform der erfindungsgemäßen Parksperre;
- Figur 5: eine schematische Ansicht einer fünften bevorzugten Ausführungsform der erfindungsgemäßen Parksperre;
- Figur 6: eine schematische Ansicht einer sechsten bevorzugten Ausführungsform der erfindungsgemäßen Parksperre;
- Figur 7: eine schematische Ansicht einer weiteren bevorzugten Ausführungsform der erfindungsgemäßen Parksperre;
- Figur 8: eine schematische Ansicht einer weiteren bevorzugten Ausführungsform der erfindungsgemäßen Parksperre;
- Figur 9: eine Detailansicht des Kolbens und der Drosselbohrung gemäß der in Figur 8 gezeigten Ausführungsform;
- Figur 10: eine schematische Ansicht einer weiteren bevorzugten Ausführungsform der erfindungsgemäßen Parksperre; und
- Figur 11: eine schematische Ansicht einer weiteren bevorzugten Ausführungsform der erfindungsgemäßen Parksperre.

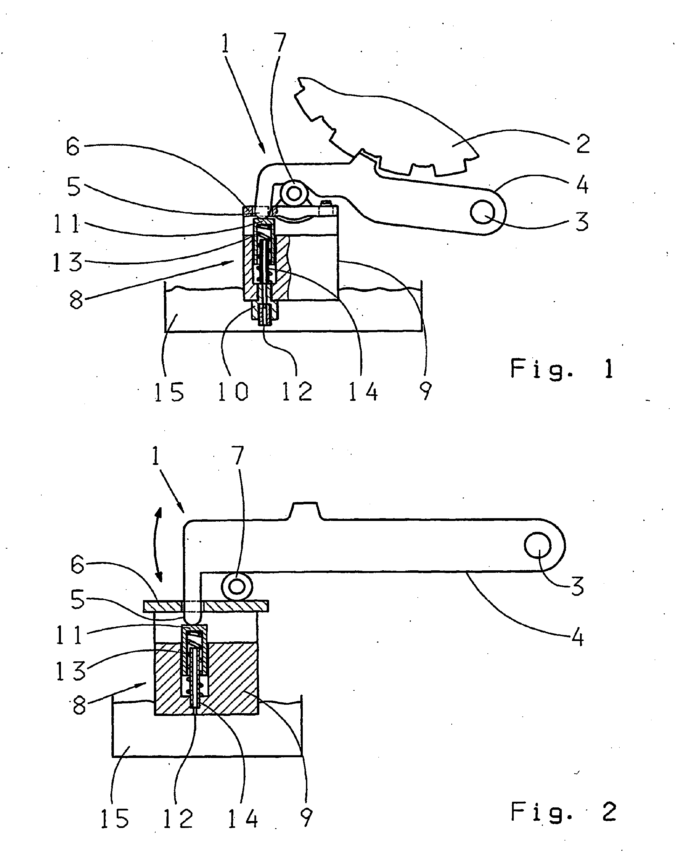

In den Figuren 1 bis 8 ist die erfindungsgemäße Parksperre im eingelegten Zustand dargestellt.

Gemäß Figur 1 umfasst die erfindungsgemäße Parksperre 1 ein mit dem Abtrieb des Getriebes verbundenes Parksperrenrad 2, eine über einen Parksperrenbolzen 3 in einem Getriebegehäuse schwenkbar gelagerte Sperrklinke 4, die in das Parksperrenrad 2 ein- oder ausrastet und deren schwenkbares Ende 5 in einer mit dem Getriebegehäuse verbundenen Führungsplatte 6 geführt ist. Ferner umfasst die Parksperre 1 ein Sperrelement 7, welches beim gezeigten Ausführungsbeispiel als Sperrkegel ausgeführt ist, das im gesperrten Zustand zwischen der Sperrklinke 4 und der Führungsplatte 6 eingeklemmt ist, um ein Herausdrücken der Sperrklinke 4 aus einer Zahnlücke des Parksperrenrades 2 zu verhindern. Entsprechend zeigt Figur 1 die Parksperre 1 im eingelegten Zustand.

Wie aus Figur 1 ersichtlich, umfasst die erfindungsgemäße Parksperre ein hydraulisches Dämpfungselement 8, mittels dessen die Bewegung des schwenkbaren Endes 5 der Sperrklinke 4 in Richtung auf die Führungsplatte 6 beim Lösen der Parksperre 1 derart gedämpft wird, dass der eingangs beschriebene Entlastungsstoß vermieden wird.

Das Dämpfungselement 8 ist unterhalb der Führungsplatte 6 gehäusefest angeordnet und umfasst im Rahmen der gezeigten Ausführungsform einen mit der Sperrklinke 4 in Wirkverbindung stehenden Kolben 11, welcher gegen die Kraft einer Druckfeder 13 in einem mit einem Ölsumpf 15 verbundenen Zylinder 9 verschiebbar angeordnet ist, wobei im Zylinder 9 mittels einer Schraube 10 ein Rohr 14 zur Selbstentlüftung angeordnet ist, derart, dass die Fluidverbindung des Zylinders zum Ölsumpf 15 über das Rohr 14 und die Schraube 10 erfolgt. Des weiteren ist an dem im Ölsumpf befindlichen Ende des Rohres 14 eine Blende 12 angeordnet, die hier beispielhaft in die Schraube 10 eingesetzt ist.

Die Funktionsweise des Dämpfungselementes 8 ist wie folgt: Beim Auslegen der Parksperre 1 wird der Sperrkegel 7 axial verschoben, wodurch die Verriegelung zwischen der Sperrklinke 4 und dem Parksperrenrad 2 freigegeben wird. Daraufhin drückt das Ende 5 der Sperrklinke 4 gegen den Kolben 11, der das im Zylinder befindliche Öl durch das Rohr 14, die Schraube 10 und die Blende 12 in den Ölsumpf 15 schiebt. Durch die Drosselwirkung der Blende 12 wird erfindungsgemäß ein "hartes" Anschlagen der Sperrklinke 4 auf die Führungsplatte 6 verhindert. In vorteilhafter Weise kann durch die Dimensionierung der Blendenbohrung die Dämpfung bzw. der Dämpfungsgrad an die Getriebeeigenschaften angepasst und eingestellt werden. Im Rückhub füllt sich der Zylinder 11 wieder mit Öl, wobei das Rohr 14 die Selbstentlüftung des Dämpfungselementes 8 bewirkt.

Die Druckfeder 13 im Zylinder 9 bewirkt beim Einlegen der Parksperre 1 ein Ausschieben des Kolbens 11, wobei dadurch der Zylinder 9 wieder mit Öl aus dem Ölsumpf 15 befüllt wird. Des weiteren wird durch die Federkraft ein sicheres Anlegen des Kolbens 11 an der Sperrklinke 4 gewährleistet. Eine vorteilhafte Weiterbildung der Erfindung sieht vor, dass das schwenkbare Ende 5 der Sperrklinke 4 konvex ausgebildet ist, wodurch ein Verkanten des Kolbens 11 im Zylinder 9 verhindert wird. Nach mehrmaligem Betätigen der Parksperre 1 entlüftet sich das System selbstständig, wobei zur Selbstentlüftung das vom Kolben 11 ausgeschobene Volumen größer sein muss als das im Rohr 14 befindliche bzw. vom Rohr 14 eingeschlossene Volumen.

Zylinder 9, Rohr 14 und Blende 12 können beispielsweise auch einteilig ausgeführt sein. Des weiteren kann das Dämpfungselement dann nur den Zylinder 9, den Kolben 11, das Rohr 14 und die Feder 13 aufweisen, wobei in diesem Fall die Blende 12 als Drosselbohrung direkt in den Zylinder 9 gebohrt und das Rohr 14 im Zylinder 9 befestigt bzw. eingepresst ist. Diese Ausgestaltung ist Gegenstand der Figur 2, wobei gleiche Bauteile mit gleichen Bezugszeichen bezeichnet sind.

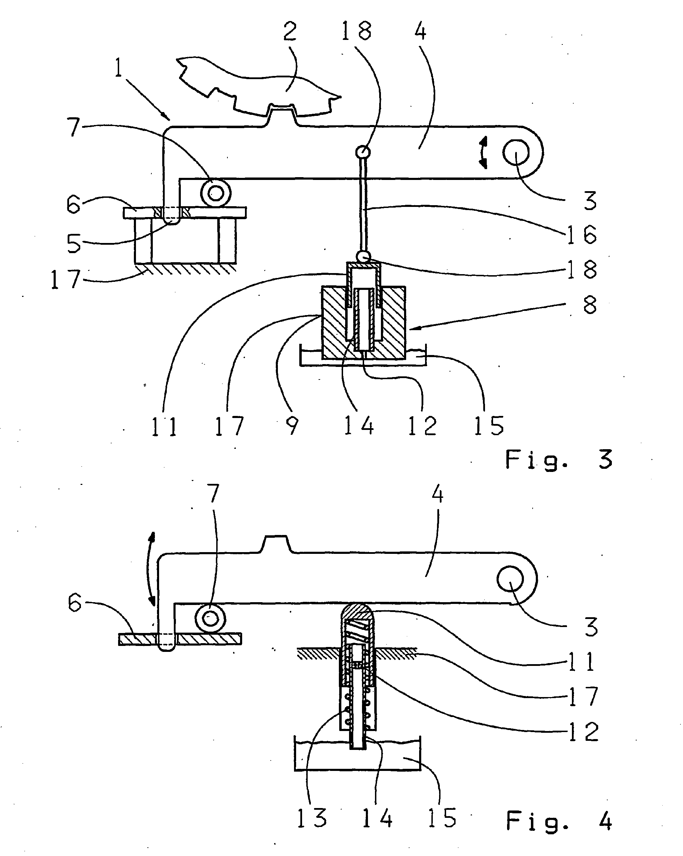

Bei dem Ausführungsbeispiel gemäß Figur 3 steht der Kolben 11 des hydraulischen Dämpfungselementes 8 nicht direkt mit der Sperrklinke 4 in Wirkverbindung; der Kolben 11 und die Sperrklinke 4 sind durch eine verschwenkbare Verbindungsstange 16 mittels spielfreier Gelenke 18 miteinander verbunden, was den Einbau des Dämpfungselementes 8 räumlich getrennt von der Sperrklinke 4 ermöglicht. Entsprechend ist auch die in Figur 3 dargestellte Ausbildung der Verbindungsstange 16 als gerade Stange nur als beispielhaft anzusehen; selbstverständlich kann die Geometrie dieser Verbindungsstange 16 auch an die jeweiligen Bauraum-Verhältnisse angepasst werden.

Der Aufbau des in Figur 3 dargestellten Dämpfungselementes 8 entspricht dem in Figur 2 gezeigten Aufbau, d.h. die Blende 12 ist als Drosselbohrung direkt in den Zylinder 9 gebohrt, wobei das Rohr 14 im Zylinder 9 befestigt bzw. eingepresst ist. Es kann auch der Aufbau des Dämpfungselementes 8 gemäß Figur 1 herangezogen werden, wenn konstruktive Gegebenheiten dies erfordern.

Der Kolben 11 des hydraulischen Dämpfungselementes 8 kann sowohl direkt in einer als Zylinder 9 dienenden Bohrung im Gehäuse 17 als auch in einem separaten gehäusefesten Zylinder 9 unterhalb der der Führungsplatte 6 zugewandten Seite der Sperrklinke 4 angeordnet sein. Durch die feste, über spielfreie Gelenke 18 und die Verbindungsstange 16 ausgeführte Verbindung zwischen Sperrklinke 4 und Kolben 11 wird innerhalb des hydraulischen Dämpfungselementes 8 keine Feder benötigt.

Gemäß Figur 4 kann das hydraulische Dämpfungselement 8 erfindungsgemäß direkt mit der Sperrklinke 4 in einem Bereich außerhalb des Bereiches des schwenkbaren Endes 5 in Wirkverbindung stehen, wobei der Kolben 11 des hydraulischen Dämpfungselementes 8 direkt in einer als Zylinder 9 dienenden Bohrung im Gehäuse 17 unterhalb der der Führungsplatte 6 zugewandten Seite der Sperrklinke 4 verschiebbar angeordnet ist. In diesem Fall weist das der Sperrklinke 4 zugewandte Ende des Kolbens 11 vorzugsweise eine kugelige bzw. konvexe Kontur auf, um ein Abrollen der Sperrklinke 4 zu ermöglichen. Bei dem gezeigten Beispiel ist die Blende 12 in dem Rohr 14 angeordnet. Zur Einsparung eines Bauteils können Blende 12 und Rohr 14 auch einstückig ausgeführt sein, beispielsweise als ein gestauchtes Rohr mit einer Einschnürung am Innendurchmesser.

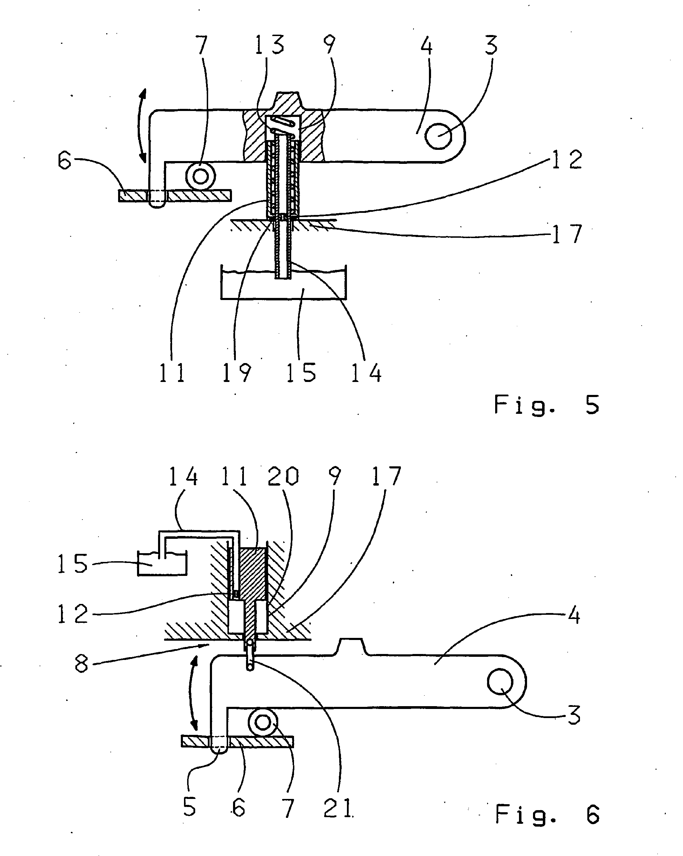

Gegenstand der Figur 5 ist ein Ausführungsbeispiel, wonach der Zylinder 9 des hydraulischen Dämpfungselementes 8 durch eine Bohrung in der Sperrklinke 4 gebildet ist. Hierbei ist die Abstützung des Kolbens 11 im Gehäuse 17 unterhalb der der Führungsplatte 6 zugewandten Seite der Sperrklinke 4 vorgesehen und das Rohr 14 ist durch das Gehäuse 17 zum Ölsumpf 15 geführt; die Dämpfung erfolgt durch Drücken des Zylinders 9 gegen den Kolben 11 durch die Sperrklinkenbewegung.

Zum Ausgleich der Axialbewegung, die durch das Verschwenken der Sperrklinke 4 entsteht, ist beim Übergang zwischen Rohr 14 und Gehäuse 17 ein Spalt 19 vorgesehen; alternativ dazu kann das Rohr 14 gebogen ausgeführt sein, wobei der Krümmungsradius der Distanz zwischen dem Parksperrenbolzen 3 und der Mitte des Dämpfungselementes 8 entspricht.

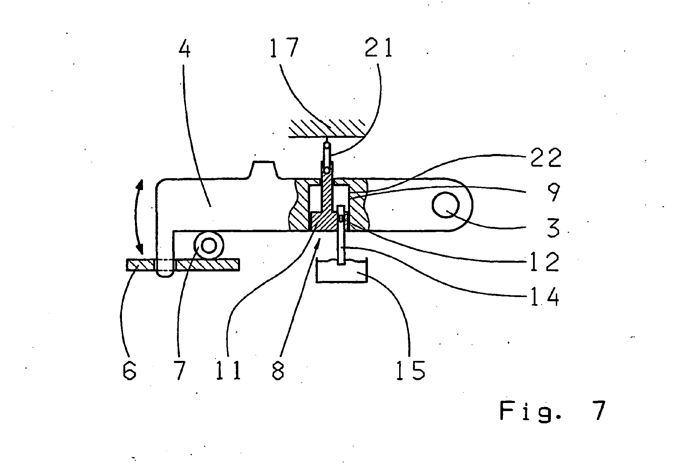

Die beschriebenen Ausführungsbeispiele betreffen Dämpfungselemente 8, welche auf Druck belastbar sind und eine Dämpfung bewirken. Es ist aber gemäß der Erfindung möglich, das hydraulische Dämpfungselement 8 derart auszubilden und anzuordnen, dass es auf Zug belastbar ist bzw. die gewünschte Dämpfung bewirkt. Diese Ausgestaltung ist Gegenstand der Figuren 6 und 7.

Bei dem in Figur 6 dargestellten Ausführungsbeispiel läuft der Kolben 11 des hydraulischen Dämpfungselementes 8 in einer Zylinderbohrung 20 im Gehäuse 17 oberhalb der der Führungsplatte abgewandten Seite der Sperrklinke 4, wobei die Sperrklinke 4 mit einem beweglichen bzw. verschwenkbaren Verbindungsgestänge oder mit einer Klammer 21 mit dem Kolben 11 verbunden ist. In diesem Fall wird beim Ausfegen der Parksperre 1 der Kolben 11 durch die Sperrklinke 4 nach unten gezogen, wobei das im Zylinder 9 bzw. in der Zylinderbohrung 20 befindliche Öl verdrängt wird und durch das Rohr 14 und die im Rohr angeordnete Blende 12 in den Ölsumpf 15 gedrückt wird. Im Rückhub füllt sich der Zylinder 9 wieder mit Öl; das Rohr 14 bewirkt die Selbstentlüftung des Dämpfungselementes. Durch die Verbindung zwischen Sperrklinke 4 und Kolben 11 wird innerhalb des hydraulischen Dämpfungselementes 8 keine Feder benötigt.

In Figur 7 ist ein Ausführungsbeispiel dargestellt, bei dem der Kolben 11 des hydraulischen Dämpfungselementes 8 in einer Zylinderbohrung 22 in der Sperrklinke 4 verschiebbar angeordnet ist, die als Zylinder 9 fungiert, wobei der Kolben mit einem beweglichen bzw. verschwenkbaren Verbindungsgestänge oder mit einer Klammer 21 mit dem Gehäuse 17 oberhalb der der Führungsplatte 6 abgewandten Seite der Sperrklinke 4 verbunden ist, was als Gegenlager des Kolbens 11 dient. Beim Auslegen der Parksperre 1 bewegt sich die Sperrklinke 4 gegen den feststehenden Kolben 11 nach unten, wobei dadurch das im Zylinder 9 befindliche Öl verdrängt und durch das Rohr 14 und die im Rohr 14 vorgesehene Blende 12 in den Ölsumpf 15 gedrückt wird. Hierbei ist der Ölsumpf unterhalb der der Führungsplatte 6 zugewandten Seite der Sperrklinke 4 angeordnet; er kann aber auch oberhalb der der Führungsplatte 6 abgewandten Seite der Sperrklinke 4 angeordnet sein.

Gemäß der Erfindung kann vorgesehen sein, dass sich das Rohr 14 nicht im Zylinder 9 erstreckt; in diesem Fall wird die Entlüftung durch weitere Maßnahmen erzielt.

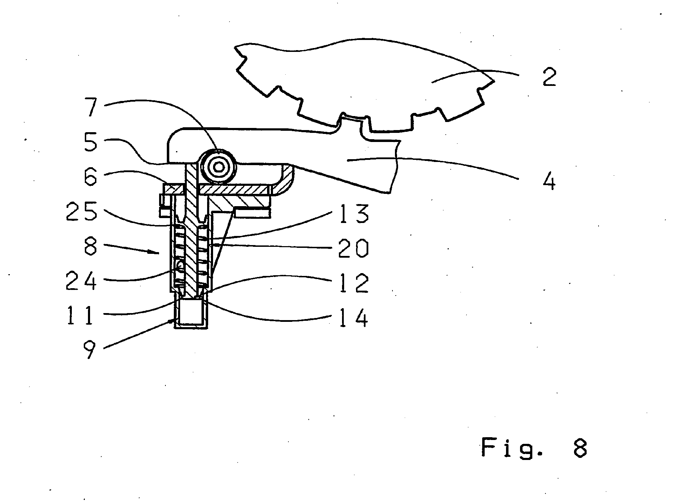

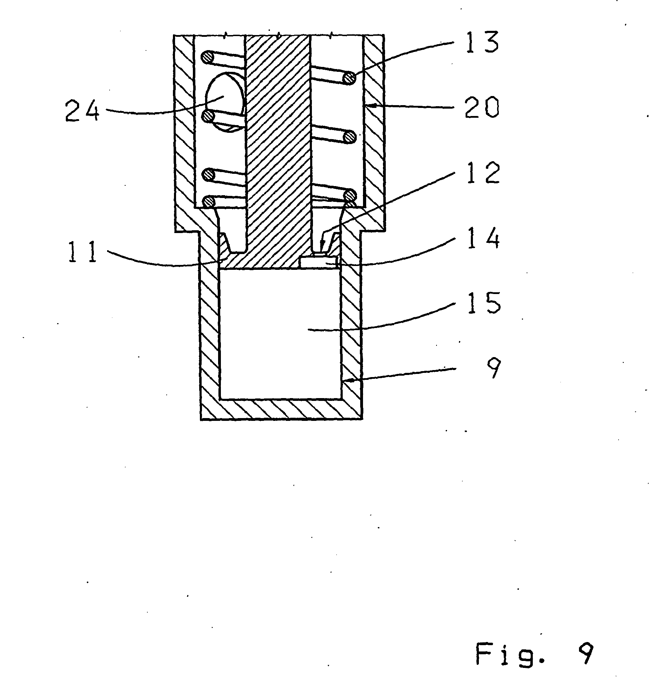

In den Figuren 8 und 9 wird eine erfindungsgemäße Ausführungsform dargestellt, bei der die Drosselbohrung 12 des hydraulischen Dämpfungselementes 8 an der der Sperrklinke 4 abgewandten Seite des von der Sperrklinke 4 bewegten Kolbens 11 vorgesehen ist.

Wie aus den Figuren 8 und 9 ersichtlich, ist oberhalb der Drosselbohrung 12 eine in der Zylinderbohrung 20 vorgesehene Befüllbohrung 24 vorgesehen, über die Getriebeöl in das Dämpfungselement 8 fließen kann, derart, dass der Ölstand bis zur Unterkante dieser Bohrung 24 reicht. Das Dämpfergehäuse ist unterhalb der Zylinderbohrung 24 geschlossen. Bei stehender Getriebeölpumpe ist der Ölstand im Getriebe oberhalb der Zylinderbohrung 24, wodurch eine Befüllung des Zylinders 9 mit Öl gewährleistet ist Wenn die. Parksperre eingelegt wird, bewegt sich der Kolben 11 durch die Druckfeder 13 von seiner untersten Position nach oben (d.h. in Richtung auf die Führungsplatte 6) und der Zylinderraum 9 unterhalb des Kolbens 11 füllt sich mit Öl, das durch die Drosselbohrung 12 des Kolbens 11 strömt. Das Ölvolumen in der Zylinderbohrung 24 ist deutlich größer als der Zylinderraum 9 unterhalb des Kolbens 11, wenn dieser seine höchste Stellung eingenommen hat. Daher ist die Funktlionsweise auch bei starker Fahrzeugneigung gewährleistet.

Beim Auslegen der Parksperre wird der Kolben 11 von der Sperrklinke 4 nach unten gedrückt; die Kolbenführung ist in Figur 8 mit dem Bezugszeichen 25 versehen. Die Kolbenbewegung bewirkt ein Fließen des sich unter dem Kolben 11 in der Zylinderbohrung 20 befindlichen Öls durch die Drosselbohrung 12, wodurch die Bewegung des Kolbens und somit auch der Sperrklinke 4 gedämpft wird.

Um Schmutzeintritt zu verhindern, kann die Befüllbohrung 24 mit einem Filter versehen werden. Des weiteren kann im oberen, der Sperrklinke 4 zugewandten Bereich des Zylinders 9 bzw. der Zylinderbohrung 20 eine Abdichtung, z.B. ein Wellendichtring eingebracht werden, der den Schmutzeintrag in das Innere des Dämpfungselementes 8 verhindert.

Alternativ zu dieser Ausgestaltung kann im oberen, der Sperrklinke zugewandten Bereich des Zylinders bzw. der Zylinderbohrung ein separates Bauteil als Deckel dienen; z.B. kann das separate Bauteil aus einem Gleitlagerwerkstoff, vorzugsweise aus Kunststoff hergestellt sein, der in den Zylinder bzw. in die Zylinderbohrung eingepresst wird. Durch das Einpressen des Deckels ist gewährleistet, dass die Druckfeder 13 und der Kolben 11 vor der Montage ins Getriebe nicht aus dem Gehäuse herausfallen können. Des weiteren ist dadurch das Dämpfungselement als separate Baugruppe ausgeführt, was die Montage in vorteilhafter Weise erleichtert. Der Kolben kann hierbei einstückig ausgeführt sein oder aus mehreren Bauteilen bestehen.

Bei der in Figur 8 dargestellten Ausführungsform ist das Dämpfungselement 8 unterhalb der Führungsplatte 6 angeordnet; es ist auch möglich, das Dämpfungselement 8 an die unterhalb des Getriebes befindliche Ölwanne zu montieren bzw. vorzusehen.

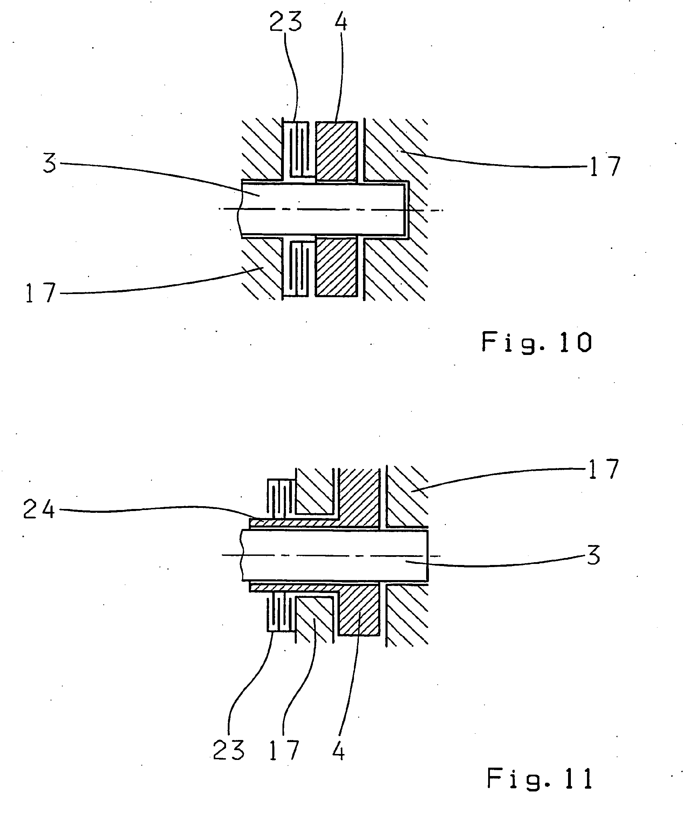

Gemäß einer weiteren besonders vorteilhaften Ausgestaltung der erfindungsgemäßen Parksperre, welche in den Figuren 10 und 11 gezeigt wird, wird die Dämpfung der Bewegung des schwenkbaren Endes 5 der Sperrklinke 4 in Richtung auf die Führungsplatte 6 beim Lösen der Parksperre 1 mittels einer Viskosekupplung bzw. eines Viskose-Drehdämpfers 23 erzielt.

Hierbei wird im Bereich des Parksperrenbolzens 3 ein Viskose-Dreh-dämpfer 23 eingesetzt, welcher die schnelle Bewegung der Sperrklinke beim Auslegen bremst bzw. dämpft und dadurch das "harte" Anschlagen der Sperrklinke 4 auf die Führungsplatte 6 verringert. Der Viskose-Drehdämpfer 23 ist an einer Seite fest mit dem Gehäuse 17 und an der anderen Seite fest mit der Sperrklinke 4 verbunden. Beim Einlegen der Parksperre 1 ist die Klinkenbewegung wesentlich langsamer als beim Auslegen, so dass sie deshalb vom Viskose-Drehdämpfer 23 nicht behindert wird.

Die Konstruktionen gemäß den Figuren 10 und 11 unterscheiden sich in der räumlichen Anordnung des Viskose-Drehdämpfers 23. Dieser kann zwischen dem Gehäuse 17 und der Sperrklinke 4, wie in Figur 10 gezeigt, oder an der der Sperrklinke 4 abgewandten Seite des Gehäuses 17 angeordnet sein (vgl. Figur 11), wobei in diesem Fall ein mit dem Viskose-Drehdämpfer 23 verbundener Klinkenzapfen 24 durch das Gehäuse 17 geführt ist.

### Bezugszeichen

- 1: Parksperre
- 2: Parksperrenrad
- 3: Parksperrenbolzen
- 4: Sperrklinke
- 5: schwenkbares Ende der Sperrklinke
- 6: Führungsplatte
- 7: Sperrelement
- 8: hydraulisches Dämpfungselement
- 9: Zylinder
- 10: Schraube
- 11: Kolben
- 12: Blende, Drosselbohrung
- 13: Druckfeder
- 14: Rohr
- 15: Ölsumpf
- 16: Verbindungsstange
- 17: Gehäuse
- 18: Gelenk
- 19: Spalt
- 20: Zylinderbohrung
- 21: Klammer
- 22: Zylinderbohrung
- 23: Viskose-Drehdämpfer
- 24: Befüllbohrung
- 25: Kolbenführung

## Patentansprüche

1. Parksperre für ein Kraftfahrzeug mit einem Automatgetriebe oder einem automatisierten Handschaltgetriebe, umfassend ein mit dem Abtrieb des Getriebes verbundenes Parksperrenrad (2), eine über einen Parksperrenbotzen (3) in einem Getriebegehäuse schwenkbar gelagerte Sperrklinke (4), die in das Parksperrenrad (2) ein- oder ausrastet und deren schwenkbares Ende in einer mit dem Getriebegehäuse verbundenen Führungsplatte (6) geführt ist, ein Sperrelement (7), das im gesperrten Zustand zwischen der Sperrklinke (4) und der Führungsplatte (6) eingeklemmt ist, um ein Herausdrücken der Sperrklinke (4) aus einer Zahnlücke des Parksperrenrades (2) zu verhindern, **dadurch gekennzeichnet, dass** sie ein hydraulisches Dämpfungselement (8) aufweist, das zumindest während des Auslegens der Parksperre (1) mit der Sperrklinke (4) in Wirkverbindung steht, mittels dessen die Bewegung des schwenkbaren Endes (5) - der Sperrklinke (4) in Richtung auf die Führungsplatte (6) beim. Lösen der Parksperre (1) derart gedämpft wird, dass ein Entlastungsstoß vermieden wird, wobei das hydraulische Dämpfungselement (8) einen mit der Sperrklinke (4) in Wirkverbindung stehenden Kolben (11) umfasst, der derart in einem Zylinder (9) oder in einer Zylinderbohrung (20, 22) verschiebbar angeordnet ist, dass eine Bewegung der Sperrklinke (4) in Richtung auf die Führungsplatte (6) in einer relativen Bewegung des Kolbens (11) und des mit Öl gefüllten Zylinders (9) zueinander resultiert, so dass das im Zylinder befindliche Öl durch eine ein Rohr (14) und eine Drosselwirkung bewirkende Blende bzw. Drosselbohrung (12) aufweisende Fluidverbindung zu einem Ölsumpf (15) gedrückt wird.

2. Parksperre für ein Kraftfahrzeug mit einem Automatgetriebe oder einem automatisierten Handschaltgetriebe nach Anspruch 1, **dadurch geekennzeichnet**, dass der Dämpfungsgrad des hydraulischen Dämpfungselementes (8) durch die Dimensionierung der Blende bzw. Drosselöffnung (12) einstellbar ist.

3. Parksperre für ein Kraftfahrzeug mit einem Automatgetriebe oder einem automatisierten Handschaltgetriebe nach Anspruch 1 oder 2, **dadurch gekennzeichnet, dass** das Rohr (14) der Selbstentlüftung dient, wobei es mittels einer Schraube (10) im Zylinder (9) befestigt oder im Zylinder (9) eingepresst ist.

4. Parksperre für ein Kraftfahrzeug mit einem Automatgetriebe oder einem automatisierten Handschaltgetriebe nach Anspruch 1, 2 oder 3, **dadurch gekennzeichnet, dass** das hydraulische Dämpfungselement (8) derart ausgeführt ist, dass das beim Lösen der Parksperre (1) vom Kolben (11) ausgeschobene Volumen größer ist als das vom Rohr (14) eingeschlossene Volumen.

5. Parksperre für ein Kraftfahrzeug mit einem Automatgetriebe oder einem automatisierten Handschaltgetriebe nach einem der Ansprüche 1 bis 4, **dadurch gekennzeichnet, dass** die Blende (12) im Rohr (14) oder, falls das Rohr (14) mittels einer Schraube (10) befestigt ist, an der Schraube (10) vorgesehen ist oder als Drosselbohrung (12) direkt in den Zylinder (9) gebohrt ist.

6. Parksperre für ein Kraftfahrzeug mit einem Automatgetriebe oder einem automatisierten Handschaltgetriebe nach einem der Ansprüche 1 bis 5, **dadurch gekennzeichnet, dass** für den Fall, dass der Kolben (11) nicht mit der Sperrklinke (4) verbunden ist, das hydraulische Dämpfungselement (8) eine im Zylinder (9) angeordnete Druckfeder (13) aufweist, welche beim Einlegen der Parksperre (1) ein Ausschieben des Kolbens (11) bewirkt, so dass der Zylinder (9) wieder mit Öl aus dem Ölsumpf (15) befüllt wird.

7. Parksperre für ein Kraftfahrzeug mit einem Automatgetriebe oder einem automatisierten Handschaltgetriebe nach einem der Ansprüche 1 bis 6, **dadurch gekennzeichnet, dass** das hydraulische Dämpfungselement (8) derart unterhalb der Führungsplatte (6) gehäusefest angeordnet ist, dass der Kolben (11) mit dem schwenkbaren Ende (5) der Sperrklinke (4) direkt in Wirkverbindung steht, wobei der Zylinder fest mit dem Gehäuse (17) verbunden ist und die Dämpfung durch Drücken des Kolbens (11) durch die Sperrklinkenbewegung erfolgt.

8. Parksperre für ein Kraftfahrzeug mit einem Automatgetriebe oder einem automatisierten Handschaltgetriebe nach Anspruch 7, **dadurch gekennzeichnet, dass** das schwenkbare Ende (5) der Sperrklinke (4) konvex ausgebildet ist.

9. Parksperre für ein Kraftfahrzeug mit einem Automatgetriebe oder einem automatisierten Handschaltgetriebe nach einem der Ansprüche 1 bis 6, **dadurch gekennzeichnet, dass** der Kolben (11) und die Sperrklinke (4) durch eine verschwenkbare Verbindungsstange (16) mittels spielfreier Gelenke (18) miteinander verbunden sind, wobei der Kolben (11) in einer als Zylinder (9) dienenden Bohrung im Gehäuse (17) oder in einem separaten gehäusefesten Zylinder (9) unterhalb der der Führungsplatte (6) zugewandten Seite der Sperrklinke (4) verschiebbar angeordnet ist, und wobei die Dämpfung durch Drücken des Kolbens (11) durch die Sperrklinkenbewegung erfolgt.

10. Parksperre für ein Kraftfahrzeug mit einem Automatgetriebe oder einem automatisierten Handschaltgetriebe nach einem der Ansprüche 1 bis 6, **dadurch gekennzeichnet, dass** der Kolben (11) direkt mit der Sperrklinke (4) in einem Bereich außerhalb des Bereiches des schwenkbaren Endes (5) in Wirkverbindung steht und direkt in einer als Zylinder (9) dienenden Bohrung im Gehäuse (17) unterhalb der der Führungsplatte (6) zugewandten Seite der Sperrklinke (4) verschiebbar angeordnet ist, und dass das der Sperrklinke (4) zugewandte Ende des Kolbens (11) eine kugelige bzw. konvexe Kontur aufweist, um ein Abrollen der Sperrklinke (4) zu ermöglichen; wobei die Dämpfung durch Drücken des Kolbens (11) durch die Sperrklinkenbewegung erfolgt.

11. Parksperre für ein Kraftfahrzeug mit einem Automatgetriebe oder einem automatisierten Handschaltgetriebe nach einem der Ansprüche 1 bis 6, **dadurch gekennzeichnet, dass** der Zylinder (9) des hydraulischen Dämpfungselementes (8) durch eine Bohrung in der Sperrklinke (4) gebildet ist, wobei die Abstützung des Kolbens (11) im Gehäuse (17) unterhalb der der Führungsplatte (6) zugewandten Seite der Sperrklinke (4) vorgesehen ist, das Rohr (14) durch das Gehäuse (17) geführt ist und die Dämpfung durch Drücken des Zylinders (9) gegen den Kolben (11) durch die Sperrklinkenbewegung erfolgt.

12. Parksperre für ein Kraftfahrzeug mit einem Automatgetriebe oder einem automatisierten Handschaltgetriebe nach Anspruch 11, **dadurch gekennzeichnet, dass** zum Ausgleich der Axialbewegung, die durch das Verschwenken der Sperrklinke (4) entsteht, beim Übergang zwischen Rohr (14) und Gehäuse (17) ein Spalt (19) vorgesehen ist

13. Parksperre für ein Kraftfahrzeug mit einem Automatgetriebe oder einem automatisierten Handschaltgetriebe nach Anspruch 11, **dadurch gekennzeichnet, dass** zum Ausgleich der Axialbewegung, die durch das Verschwenken der Sperrklinke (4) entsteht, das Rohr (14) gebogen ausgeführt ist, wobei der Krümmungsradius der Distanz zwischen dem Parksperrenbolzen (3) und der Mitte des Dämpfungselementes (8) entspricht.

14. Parksperre für ein Kraftfahrzeug mit einem Automatgetriebe oder einem automatisierten Handschaltgetriebe nach einem der Ansprüche 1 bis 6, **dadurch gekennzeichnet, dass** der Kolben (11) des hydraulischen Dämpfungselementes (8) in einer Zylinderbohrung (20) im Gehäuse (17) oberhalb der der Führungsplatte (6) abgewandten Seite der Sperrklinke (4) verschiebbar angeordnet ist, wobei die Sperrklinke (4) mit einem beweglichen bzw. verschwenkbaren Verbindungsgestänge oder mit einer Klammer (21) mit dem Kolben (11) verbunden ist, und wobei die Dämpfung durch Ziehen des Kolbens (11) durch die Sperrklinkenbewegung erfolgt.

15. Parksperre für ein Kraftfahrzeug mit einem Automatgetriebe oder einem automatisierten Handschaltgetriebe nach einem der Ansprüche 1 bis 6, **dadurch gekennzeichnet, dass** der Kolben (11) des hydraulischen Dämpfungselementes (8) in einer Zylinderbohrung (22) in der Sperrklinke (4) verschiebbar angeordnet ist, die als Zylinder (9) fungiert, wobei der Kolben (11) mit einem beweglichen bzw. verschwenkbaren Verbindungsgestänge oder mit einer Klammer (21) mit dem Gehäuse (17) oberhalb der der Führungsplatte (6) abgewandten Seite der Sperrklinke (4) verbunden ist, der Ölsumpf unterhalb der der Führungsplatte (6) zugewandten Seite der Sperrklinke (4) angeordnet ist, und wobei die Dämpfung durch die Bewegung des Zylinders (9) bezüglich des fest mit dem Gehäuse (17) verbundenen Kolbens (11) durch die Sperrklinkenbewegung erfolgt.

16. Parksperre für ein Kraftfahrzeug mit einem Automatgetriebe oder einem automatisierten Handschaltgetriebe, umfassend ein mit dem Abtrieb des Getriebes verbundenes Parksperrenrad (2), eine über einen Parksperrenbolzen (3) in einem Getriebegehäuse schwenkbar gelagerte Sperrklinke (4), die in das Parksperrenrad (2) ein- oder ausrastet und deren schwenkbares Ende in einer mit dem Getriebegehäuse verbundenen Führungsplatte (6) geführt ist, ein Sperrelement (7), das im gesperrten Zustand zwischen der Sperrklinke (4) und der Führungsplatte (6) eingeklemmt ist, um ein Herausdrücken der Sperrklinke (4) aus einer Zahnlücke des Parksperrenrades (2) zu verhindern, **dadurch gekennzeichnet, dass** sie ein hydraulisches Dämpfungselement (8) aufweist, das zumindest während des Auslegens der Parksperre (1) mit der Sperrklinke (4) in Wirkverbindung steht, mittels dessen die Bewegung des schwenkbaren Endes (5) der Sperrklinke (4) in Richtung auf die Führungsplatte (6) beim Lösen der Parksperre (1) derart gedämpft wird, dass ein Entlastungsstoß vermieden wird, wobei das hydraulische Dämpfungselement (8) einen mit der Sperrklinke (4) in Wirkverbindung stehenden Kolben (11) umfasst, der derart in einem für Luftzufuhr geschlossenen Zylinder (9) oder in einer für Luftzufuhr geschlossenen Zylinderbohrung (20, 22) verschiebbar angeordnet ist, dass eine Bewegung der Sperrklinke (4) in Richtung auf die Führungsplatte (6) in einer relativen Bewegung des Kolbens (11) und des mit Öl gefüllten Zylinders (9) bzw. derZylinderbohrung (20) zueinander resultiert, wobei der Kolben an seiner der Sperrklinke (4) abgewandten Seite eine Drosselbohrung (12) aufweist und oberhalb der Drosselbohrung (12) in dem Zylinder (9) bzw. in der Zylinderbohrung (20, 22) eine Befüllbohrung (24) für das Getriebeöl vorgesehen ist, derart, dass die Bewegung des Kolbens (11) durch die Drosselwirkung der Drosselbohrung (12) gedämpft wird.

17. Parksperre für ein Kraftfahrzeug mit einem Automatgetriebe oder einem automatisierten Handschaltgetriebe nach Anspruch 16, **dadurch gekennzeichnet, dass** der Dämpfungsgrad des hydraulischen Dämpfungselementes (8) durch die Dimensionierung der Drosselöffnung (12) einstellbar ist.

18. Parksperre für ein Kraftfahrzeug mit einem Automatgetriebe oder einem automatisierten Handschaltgetriebe nach Anspruch 16 oder 17, **dadurch gekennzeichnet, dass** die Befüllbohrung (24) mit einem Filter versehen ist, um Schmutzeintritt zu verhindern.

19. Parksperre für ein Kraftfahrzeug mit einem Automatgetriebe oder einem automatisierten Handschaltgetriebe nach Anspruch 16, 17 oder 18, **dadurch gekennzeichnet, dass** im oberen, der Sperrklinke (4) zugewandten Bereich des Zylinders (9) bzw. der Zylinderbohrung (20) eine Abdichtung vorgesehen ist, die den Schmutzeintrag in das Innere des Dämpfungselementes (8) verhindert.

20. Parksperre für ein Kraftfahrzeug mit einem Automatgetriebe oder einem automatisierten Handschaltgetriebe nach Anspruch 16, 17 oder 18, **dadurch gekennzeichnet, dass** im oberen, der Sperrklinke (4) zugewandten Bereich des Zylinders (9) bzw. der Zylinderbohrung (20) ein separates Bauteil vorgesehen ist, das als Deckel dient.

21. Parksperre für ein Kraftfahrzeug mit einem Automatgetriebe oder einem automatisierten Handschaltgetriebe nach Anspruch 20, **dadurch gekennzeichnet, dass** das separate Bauteil aus einem Gleitlagerwerkstoff hergestellt und in den Zylinder (9) bzw. in die Zylinderbohrung (20) eingepresst ist.

22. Parksperre für ein Kraftfahrzeug mit einem Automatgetriebe oder einem automatisierten Handschaltgetriebe nach einem der Ansprüche 16 bis 21, **dadurch gekennzeichnet, dass** für den Fall, dass der Kolben (11) nicht mit der Sperrklinke (4) verbunden ist, das hydraulische Dämpfungselement (8) eine im Zylinder (9) angeordnete Druckfeder (13) aufweist, welche beim Einlegen der Parksperre (1) ein Ausschieben des Kolbens (11) bewirkt

23. Parksperre für ein Kraftfahrzeug mit einem Automatgetriebe oder einem automatisierten Handschaltgetriebe nach einem der Ansprüche 20 bis 22, **dadurch gekennzeichnet, dass** das Dämpfungselement (8) als separate Baugruppe ausgeführt ist.

## Claims

1. Parking lock for a motor vehicle having an automatic transmission or an automated manual transmission, comprising: a parking-lock wheel (2) connected to the output of the transmission; a locking pawl (4), which is pivotally mounted in a transmission housing by means of a parking-lock pin (3), engages in or disengages from the parking-lock wheel (2), and whose pivotable end is guided in a guide plate (6) which is connected to the transmission housing; a locking element (7) which, in the locked state, is constrained between the locking pawl (4) and the guide plate (6) in order to prevent the locking pawl (4) from being pressed out of a tooth space of the parking-lock wheel (2), **characterized in that** said parking lock has a hydraulic damping element (8) which, at least during the releasing of the parking lock (1), is operatively connected to the locking pawl (4), and by means of which the movement of the pivotable end (5) of the locking pawl (4) in the direction of the guide plate (6) in the releasing of the parking lock (1) is damped in such a way that a release jolt is prevented, the hydraulic damping element (8) comprising a piston (11), which is operatively connected to the locking pawl (4), and which is displaceably disposed in a cylinder (9) or in a cylinder bore (20, 22) in such a way that a movement of the locking pawl (4) in the direction of the guide plate (6) results in a relative movement of the piston (11) and of the oil-filled cylinder (9) towards each other, such that the oil present in the cylinder is forced through a tube (14) and through a fluid connection, which has an orifice constrictor or throttling bore (12) that causes a throttling effect, to an oil sump (15).

2. Parking lock for a motor vehicle having an automatic transmission or an automated manual transmission according to Claim 1, **characterized in that** the degree of damping of the hydraulic damping element (8) can be adjusted through the dimensioning of the orifice constrictor or throttling aperture (12).

3. Parking lock for a motor vehicle having an automatic transmission or an automated manual transmission according to either of Claims 1 or 2, **characterized in that** the tube (14) serves the function of self-venting, and can be fastened in the cylinder (9) by means of a screw (10) or be pressed into the cylinder (9).

4. Parking lock for a motor vehicle having an automatic transmission or an automated manual transmission according to any one of Claims 1, 2 or 3, **characterized in that** the hydraulic damping element (8) is of such design that the volume pushed out by the piston (11) in the releasing of the parking lock (1) is larger than the volume enclosed by the tube (14) .

5. Parking lock for a motor vehicle having an automatic transmission or an automated manual transmission according to any one of Claims 1 to 4, **characterized in that** the orifice constrictor (12) is provided in the tube (14) or, if the tube (14) is fastened by means of a screw (10), provided on the screw (10), or is drilled, as a throttling bore (12), directly into the cylinder (9).

6. Parking lock for a motor vehicle having an automatic transmission or an automated manual transmission according to any one of Claims 1 to 5, **characterized in that**, if the piston (11) is not connected to the locking pawl (4), the hydraulic damping element (8) has a compression spring (13) disposed in the cylinder (9), this spring causing the piston (11) to be pushed out upon engagement of the parking lock (1), such that the cylinder (9) is again filled with oil from the oil sump (15).

7. Parking lock for a motor vehicle having an automatic transmission or an automated manual transmission according to any one of Claims 1 to 6, **characterized in that** the hydraulic damping element (8) is disposed, solid with the housing, beneath the guide plate (6) in such a way that the piston (11) is operatively connected to the pivotable end (5) of the locking pawl (4) by a direct connection, the cylinder being fixedly connected to the housing (17) and the damping being effected **in that** the piston (11) is pressed by the movement of the locking pawl.

8. Parking lock for a motor vehicle having an automatic transmission or an automated manual transmission according to Claim 7, **characterized in that** the pivotable end (5) of the locking pawl (4) is of a convex design.

9. Parking lock for a motor vehicle having an automatic transmission or an automated manual transmission according to any one of Claims 1 to 6, **characterized in that** the piston (11) and the locking pawl (4) are connected to each other through a pivotable connecting rod (16) by means of backlash-free articulations (18), the piston (11) being displaceably disposed in a bore in the housing (17), which bore serves as a cylinder (9), or in a separate cylinder (9), solid with the housing, beneath that side of the locking pawl (4) which faces towards the guide plate (6), and the damping being effected **in that** the piston (11) is pressed by the movement of the locking pawl.

10. Parking lock for a motor vehicle having an automatic transmission or an automated manual transmission according to any one of Claims 1 to 6, **characterized in that** the piston (11) is operatively connected to the locking pawl (4) by direct connection in a region outside the region of the pivotable end (5), and is displaceably disposed directly in a bore in the housing (17), which bore serves as a cylinder (9), beneath that side of the locking pawl (4) which faces towards the guide plate (6), and that end of the piston (11) which faces towards the locking pawl (4) has a spherical or convex contour to allow rolling of the locking pawl (4), the damping being effected **in that** the piston (11) is pressed by the movement of the locking pawl.

11. Parking lock for a motor vehicle having an automatic transmission or an automated manual transmission according to any one of Claims 1 to 6, **characterized in that** the cylinder (9) of the hydraulic damping element (8) is constituted by a bore in the locking pawl (4), the support of the piston (11) in the housing (17) being provided beneath that side of the locking pawl (4) which faces towards the guide plate (6), the tube (14) being routed through the housing (17) and the damping being effected **in that** the cylinder (9) is pressed against the piston (11) by the movement of the locking pawl.

12. Parking lock for a motor vehicle having an automatic transmission or an automated manual transmission according to Claim 11, **characterized in that**, for the purpose of equalizing the axial movement produced by the pivoting of the locking pawl (4), a gap (19) is provided at the transition between the tube (14) and the housing (17).

13. Parking lock for a motor vehicle having an automatic transmission or an automated manual transmission according to Claim 11, **characterized in that**, for the purpose of equalizing the axial movement produced by the pivoting of the locking pawl (4), the tube (14) is of a bent design, the radius of curvature corresponding to the distance between the parking-lock pin (3) and the centre of the damping element (8).

14. Parking lock for a motor vehicle having an automatic transmission or an automated manual transmission according to any one of Claims 1 to 6, **characterized in that** the piston (11) of the hydraulic damping element (8) is displaceably disposed in a cylinder bore (20) in the housing (17) above that side of the locking pawl (4) which faces away from the guide plate (6), the locking pawl (4) being connected to the piston (11) by means of a movable or pivotable connecting linkage or by means of a clamp (21), and the damping being effected **in that** the piston (11) is pulled by the movement of the locking pawl.

15. Parking lock for a motor vehicle having an automatic transmission or an automated manual transmission according to any one of Claims 1 to 6, **characterized in that** the piston (11) of the hydraulic damping element (8) is displaceably disposed in a cylinder bore (22) in the locking pawl (4), which cylinder bore functions as a cylinder (9), the piston (11) being connected to the housing (17), above that side of the locking pawl (4) which faces away from the guide plate (6), by means of a movable or pivotable connecting linkage or by means of a clamp (21), the oil sump being disposed beneath that side of the locking pawl (4) which faces towards the guide plate (6), and the damping being effected **in that** the cylinder (9) is moved, relative to the piston (11) fixedly connected to the housing (17), by the movement of the locking pawl.

16. Parking lock for a motor vehicle having an automatic transmission or an automated manual transmission, comprising: a parking-lock wheel (2) connected to the output of the transmission; a locking pawl (4), which is pivotally mounted in a transmission housing by means of a parking-lock pin (3), engages in or disengages from the parking-lock wheel (2), and whose pivotable end is guided in a guide plate (6) which is connected to the transmission housing; a locking element (7) which, in the locked state, is constrained between the locking pawl (4) and the guide plate (6) in order to prevent the locking pawl (4) from being pressed out of a tooth space of the parking-lock wheel (2), **characterized in that** said parking lock has a hydraulic damping element (8) which, at least during the releasing of the parking lock (1), is operatively connected to the locking pawl (4), and by means of which the movement of the pivotable end (5) of the locking pawl (4) in the direction of the guide plate (6) in the releasing of the parking lock (1) is damped in such a way that a release jolt is prevented, the hydraulic damping element (8) comprising a piston (11), which is operatively connected to the locking pawl (4), and which is displaceably disposed in a cylinder (9) closed for air supply or in a cylinder bore (20, 22) closed for air supply in such a way that a movement of the locking pawl (4) in the direction of the guide plate (6) results in a relative movement of the piston (11) and of the oil-filled cylinder (9) or cylinder bore (20) towards each other, the piston having, on its side which faces away from the locking pawl (4), a throttling bore (12), and a filling bore (24) for the transmission oil being provided, above the throttling bore (12), in the cylinder (9) or in the cylinder bore (20, 22), in such a way that the movement of the piston (11) is damped by the throttling effect of the throttling bore (12).

17. Parking lock for a motor vehicle having an automatic transmission or an automated manual transmission according to Claim 16, **characterized in that** the degree of damping of the hydraulic damping element (8) can be adjusted through the dimensioning of the throttling aperture (12).

18. Parking lock for a motor vehicle having an automatic transmission or an automated manual transmission according to either of Claims 16 or 17, **characterized in that** the filling bore (24) is provided with a filter to prevent the ingress of dirt.

19. Parking lock for a motor vehicle having an automatic transmission or an automated manual transmission according to any one of Claims 16, 17 or 18, **characterized in that** a seal is provided **in that** upper region of the cylinder (9) or of the cylinder bore (20) which faces towards the locking pawl (4), said seal preventing the ingress of dirt into the interior of the damping element (8).

20. Parking lock for a motor vehicle having an automatic transmission or an automated manual transmission according to any one of Claims 16, 17 or 18, **characterized in that** a separate component, which serves as a cover, is provided **in that** upper region of the cylinder (9) or of the cylinder bore (20) which faces towards the locking pawl (4).

21. Parking lock for a motor vehicle having an automatic transmission or an automated manual transmission according to Claim 20, **characterized in that** the separate component is produced from a friction-bearing material and is pressed into the cylinder (9) or into the cylinder bore (20).

22. Parking lock for a motor vehicle having an automatic transmission or an automated manual transmission according to any one of Claims 16 to 21, **characterized in that**, if the piston (11) is not connected to the locking pawl (4), the hydraulic damping element (8) has a compression spring (13) disposed in the cylinder (9), this spring causing the piston (11) to be pushed out upon engagement of the parking lock (1).

23. Parking lock for a motor vehicle having an automatic transmission or an automated manual transmission according to any one of Claims 20 to 22, **characterized in that** the damping element (8) is realized as a separate assembly.

## Revendications

1. Frein de stationnement pour un véhicule automobile équipé d'une boîte de vitesses automatique ou d'une boîte de vitesses manuelle automatisée comprenant une roue de frein de stationnement (2) reliée à l'organe de sortie de la boîte de vitesses, un cliquet de verrouillage (4) monté pivotant dans un carter de boîte de vitesses par l'intermédiaire d'un axe de frein de stationnement (3) et qui s'encliquette dans la roue de frein de stationnement (2) ou s'en dégage et dont l'extrémité pivotante est guidée dans une plaque de guidage (6) reliée au carter de boîte de vitesses, un élément de verrouillage (7) qui, dans l'état verrouillé, est coincé entre le cliquet de verrouillage (4) et la plaque de guidage (6), pour empêcher que le cliquet de verrouillage (4) ne soit éjecté d'un creux de denture de la roue de frein de stationnement (2), **caractérisé en ce qu'**il comporte un élément d'amortissement hydraulique (8) qui est en liaison effective avec le cliquet de verrouillage (4) au moins pendant le desserrage du frein de stationnement (1), et au moyen duquel le déplacement de l'extrémité pivotante (5) du cliquet de verrouillage (4) en direction de la plaque de guidage (6) qui est décrit lors du desserrage du frein de stationnement (1) est amorti de manière à éviter un choc de décharge, l'élément d'amortissement hydraulique (8) comportant un piston (11) en liaison effective avec le cliquet de verrouillage (4) et qui est disposé coulissant dans un cylindre (9) ou dans un perçage cylindrique (20, 22) de telle manière qu'un déplacement du cliquet de verrouillage (4) en direction de la plaque de guidage (6) ait pour résultat un déplacement relatif du piston (11) et du cylindre (9) rempli d'huile l'un par rapport à l'autre, de sorte que l'huile qui se trouve dans le cylindre est refoulée vers un carter d'huile (15) en passant par un tube (14), et un diaphragme engendrant un effet d'étranglement ou une canalisation d'huile comportant un perçage d'étranglement (12).

2. Frein de stationnement pour un véhicule automobile équipé d'une boîte de vitesses automatique ou d'une boîte de vitesses manuelle automatisée selon la revendication 1, **caractérisé en ce que** le degré d'amortissement de l'élément d'amortissement hydraulique (8) peut être réglé par le dimensionnement du diaphragme ou de l'ouverture d'étranglement (12).

3. Frein de stationnement pour un véhicule automobile équipé d'une boîte de vitesses automatique ou d'une boîte de vitesses manuelle automatisée selon la revendication 1 ou 2, **caractérisé en ce que** le tube (14) sert à la purge d'air automatique, ce tube étant fixé dans le cylindre (9) au moyen d'une vis (10) ou étant emmanché à force dans le cylindre (9).

4. Frein de stationnement pour un véhicule automobile équipé d'une boîte de vitesses automatique ou d'une boîte de vitesses manuelle automatisée selon la revendication 1, 2 ou 3, **caractérisé en ce que** l'élément d'amortissement hydraulique (8) est réalisé de telle manière que le volume refoulé par le piston (11) lors du desserrage du frein de stationnement (1) est plus grand que le volume enfermé par le tube (14).

5. Frein de stationnement pour un véhicule automobile équipé d'une boîte de vitesses automatique ou d'une boîte de vitesses manuelle automatisée selon l'une des revendications 1 à 4, **caractérisé en ce que** le diaphragme (12) est prévu dans le tube (14) ou, si le tube (14) est fixé au moyen d'une vis (10), il est prévu sur la vis (10) ou encore il est percé directement dans le cylindre (9) en formant un perçage d'étranglement.

6. Frein de stationnement pour un véhicule automobile équipé d'une boîte de vitesses automatique ou d'une boîte de vitesses manuelle automatisée selon l'une des revendications 1 à 5, **caractérisé en ce que**, dans le cas où le piston (11) n'est pas relié au cliquet de verrouillage (4), l'élément d'amortissement hydraulique (8) comporte un ressort de compression (13) disposé dans le cylindre (9) et qui, lors de l'application du frein de stationnement (1), provoque une extension du piston (11) à l'extérieur, de sorte que le cylindre (9) se remplit de nouveau d'huile arrivant du carter d'huile (15).

7. Frein de stationnement pour un véhicule automobile équipé d'une boîte de vitesses automatique ou d'une boîte de vitesses manuelle automatisée selon l'une des revendications 1 à 6, **caractérisé en ce que** l'élément d'amortissement hydraulique (8) est disposé en dessous de la plaque de guidage (6), **en ce que** le piston (11) est en liaison effective directe avec l'extrémité pivotante (5) du cliquet de verrouillage (4), le cylindre étant relié rigidement au carter (17) et l'amortissement se produisant sous l'effet de la compression du piston (11) exécutée par le déplacement du cliquet de verrouillage.

8. Frein de stationnement pour un véhicule automobile équipé d'une boîte de vitesses automatique ou d'une boîte de vitesses manuelle automatisée selon la revendication 7, **caractérisé en ce que** l'extrémité pivotante (5) du cliquet de verrouillage (4) est de forme convexe.

9. Frein de stationnement pour un véhicule automobile équipé d'une boîte de vitesses automatique ou d'une boîte de vitesses manuelle automatisée selon l'une des revendications 1 à 6, **caractérisé en ce que** le piston (11) et le cliquet de verrouillage (4) sont reliés entre eux par une tringle de liaison pivotante (16) au moyen d'une articulation sans jeu (18), le piston (11) étant disposé coulissant dans un perçage du carter (17) qui sert de cylindre (9) ou dans un cylindre séparé (9) solidaire du carter, en dessous du côté du cliquet de verrouillage (4) qui est dirigé vers la plaque de guidage (6) et l'amortissement se produisant sous l'effet de la compression du piston (11) résultant du déplacement du cliquet de verrouillage.

10. Frein de stationnement pour un véhicule automobile équipé d'une boîte de vitesses automatique ou d'une boîte de vitesses manuelle automatisée selon l'une des revendications 1 à 6, **caractérisé en ce que** le piston (11) est en liaison effective directe avec le cliquet de verrouillage (4) dans une région située à l'extérieur de la région de l'extrémité pivotante (5) et est disposé coulissant dans un perçage du carter (17) qui sert de cylindre (9), en dessous du côté du cliquet de verrouillage (4) qui est dirigé vers la plaque de guidage (6), et **en ce que** l'extrémité du piston (11) qui est dirigée vers le cliquet de verrouillage (4) présente un profil sphérique ou convexe, pour permettre un mouvement de roulement du cliquet de verrouillage (4), l'amortissement s'effectuant sous l'effet de la compression du piston (11) résultant du déplacement du cliquet de verrouillage.

11. Frein de stationnement pour un véhicule automobile équipé d'une boîte de vitesses automatique ou d'une boîte de vitesses manuelle automatisée selon l'une des revendications 1 à 6, **caractérisé en ce que** le cylindre (9) de l'élément d'amortissement hydraulique (8) est formé par un perçage du cliquet de verrouillage (4), l'appui du piston (11) étant prévu dans le carter (17) en dessous du côté du cliquet de verrouillage (4) qui est dirigé vers la plaque de guidage (6), le tube (14) étant enfilé à travers le carter (17) et l'amortissement s'effectuant sous l'effet de la pression du cylindre (9) contre le piston (11) résultant du déplacement du cliquet de verrouillage.

12. Frein de stationnement pour un véhicule automobile équipé d'une boîte de vitesses automatique ou d'une boîte de vitesses manuelle automatisée selon la revendication 11, **caractérisé en ce que**, pour la compensation du déplacement axial qui est produit par le pivotement du cliquet de verrouillage (4), il est prévu une fente (19) à la jonction entre le tube (14) et le carter (17).

13. Frein de stationnement pour un véhicule automobile équipé d'une boîte de vitesses automatique ou d'une boîte de vitesses manuelle automatisée selon la revendication 11, **caractérisé en ce que**, pour la compensation du déplacement axial qui est produit par le pivotement du cliquet de verrouillage (4), le tube (14) est courbé, le rayon de courbure correspondant à la distance entre l'axe (3) du frein de stationnement et le centre de l'élément d'amortissement (8).

14. Frein de stationnement pour un véhicule automobile équipé d'une boîte de vitesses automatique ou d'une boîte de vitesses manuelle automatisée selon l'une des revendications 1 à 6, **caractérisé en ce que** le piston (11) de l'élément d'amortissement hydraulique (8) est disposé coulissant dans un perçage cylindrique (20) du carter (17) au-dessus du côté du cliquet de verrouillage (4) qui est à l'opposé de la plaque de guidage (6), le cliquet de verrouillage (4) étant relié au piston (11) au moyen d'une tringle de liaison mobile ou pivotante ou encore au moyen d'une agrafe (21), et l'amortissement s'effectuant par une traction du piston (11) résultant du déplacement du cliquet de verrouillage.

15. Frein de stationnement pour un véhicule automobile équipé d'une boîte de vitesses automatique ou d'une boîte de vitesses manuelle automatisée selon l'une des revendications 1 à 6, **caractérisé en ce que** le piston (11) de l'élément d'amortissement hydraulique (8) est disposé coulissant dans un perçage cylindrique (22) du cliquet de verrouillage (4) qui joue le rôle de cylindre (9), le piston (11) étant relié au carter (17) au moyen d'une tringle de liaison mobile ou pivotante ou au moyen d'une agrafe (21), au-dessus du côté du cliquet de verrouillage (4) qui est éloigné de la plaque de guidage (6), le carter d'huile étant disposé en dessous du côté du cliquet de verrouillage (4) qui est dirigé vers la plaque de guidage (6), et l'amortissement s'effectuant par le déplacement du cylindre (9) par rapport au piston (11) relié rigidement au carter (17) qui résulte du déplacement du cliquet de verrouillage.

16. Frein de stationnement pour un véhicule automobile équipé d'une boîte de vitesses automatique ou d'une boîte de vitesses manuelle automatisée comprenant une roue de frein de stationnement (2) reliée à l'organe de sortie de la boîte de vitesses, un cliquet de verrouillage (4) monté pivotant dans un carter de boîte de vitesses par l'intermédiaire d'un axe de frein de stationnement (3), et qui s'encliquette dans la roue de frein de stationnement (2) ou s'en dégage et dont l'extrémité pivotante est guidée dans une plaque de guidage (6) reliée au carter de boîte de vitesses, un élément de verrouillage (7) qui, dans l'état verrouillé, est coincé entre le cliquet de verrouillage (4) et la plaque de guidage (6), pour empêcher que le cliquet de verrouillage (4) ne soit éjecté d'un creux de denture de la roue de frein de stationnement (2), **caractérisé en ce qu'**il comporte un élément d'amortissement hydraulique (8) qui est en liaison effective avec le cliquet de verrouillage (4) au moins pendant le desserrage du frein de stationnement (1), et au moyen duquel le déplacement de l'extrémité pivotante (5) du cliquet de verrouillage (4) en direction de la plaque de guidage (6), qui est décrit lors du desserrage du frein de stationnement (1), est amorti de manière à éviter un choc de décharge, l'élément d'amortissement hydraulique (8) comportant un piston (11) en liaison effective avec le cliquet de verrouillage (4) et qui est disposé coulissant dans un cylindre (9) fermé pour l'amenée d'air ou dans un perçage cylindrique (20, 22) fermé pour l'amenée d'air, de telle manière qu'un déplacement du cliquet de verrouillage (4) en direction de la plaque de guidage (6) ait pour résultat un déplacement relatif du piston (11) et du cylindre (9) rempli d'huile, ou du perçage cylindrique (20) l'un par rapport à l'autre, le piston comportant un perçage d'étranglement (12) sur son côté éloigné du cliquet de verrouillage (4), et un perçage de remplissage d'huile (24) pour l'huile de la boîte de vitesses étant prévu au-dessus du perçage d'étranglement (12) dans le cylindre (9) ou dans le perçage cylindrique (20, 22), de telle sorte que le déplacement du piston (11) est amorti par l'effet d'étranglement du perçage d'étranglement (12).

17. Frein de stationnement pour un véhicule automobile équipé d'une boîte de vitesses automatique ou d'une boîte de vitesses manuelle automatisée selon la revendication 16, **caractérisé en ce que** le degré d'amortissement de l'élément d'amortissement hydraulique (8) peut être réglé par le dimensionnement de l'ouverture d'étranglement (12).

18. Frein de stationnement pour un véhicule automobile équipé d'une boîte de vitesses automatique ou d'une boîte de vitesses manuelle automatisée selon la revendication 16 ou 17, **caractérisé en ce que** l'ouverture de remplissage (24) est pourvue d'un filtre pour empêcher la pénétration des impuretés.

19. Frein de stationnement pour un véhicule automobile équipé d'une boîte de vitesses automatique ou d'une boîte de vitesses manuelle automatisée selon la revendication 16, 17 ou 18, **caractérisé en ce que**, dans la région supérieure du cylindre (9) ou du perçage cylindrique (20) qui est dirigée vers le cliquet de verrouillage (4) est prévu un élément d'étanchéité qui empêche la pénétration d'impuretés dans le volume intérieur de l'élément d'amortissement (8).

20. Frein de stationnement pour un véhicule automobile équipé d'une boîte de vitesses automatique ou d'une boîte de vitesses manuelle automatisée selon la revendication 16, 17 ou 18, **caractérisé en ce que**, dans la région supérieure du cylindre (9) ou du perçage cylindrique (20) qui est dirigée vers le cliquet de verrouillage (4) est prévu un élément séparé qui sert de couvercle.

21. Frein de stationnement pour un véhicule automobile équipé d'une boîte de vitesses automatique ou d'une boîte de vitesses manuelle automatisée selon la revendication 20, **caractérisé en ce que** l'élément séparé est fabriqué en une matière pour paliers lisses et est emmanché à force dans le cylindre (9) ou dans le perçage cylindrique (20).

22. Frein de stationnement pour un véhicule automobile équipé d'une boîte de vitesses automatique ou d'une boîte de vitesses manuelle automatisée selon l'une des revendications 16 à 21, **caractérisé en ce que**, dans le cas où le piston (11) n'est pas relié au cliquet de verrouillage (4), l'élément d'amortissement hydraulique (8) comporte un ressort de compression (13) disposé dans le cylindre (9) et qui, lors de l'application du frein de stationnement (1), provoque une extension du piston (11) à l'extérieur.

23. Frein de stationnement pour un véhicule automobile équipé d'une boîte de vitesses automatique ou d'une boîte de vitesses manuelle automatisée selon l'une des revendications 20 à 22, **caractérisé en ce que** l'élément d'amortissement hydraulique (8) est constitué par un groupe séparé.
